# EUROPÄISCHE PATENTSCHRIFT

(11) **EP 1 460 283 B1**
(45) Veröffentlichungstag und Bekanntmachung des Hinweises auf die Patenterteilung: **23.11.2011**
(21) Anmeldenummer: 04006469.3
(22) Anmeldetag: 18.03.2004
(51) Int. Cl.: F16B 39/24, F16B 41/00, F16D 65/12, F16B 21/16

(54) **Verliersicherung für Radbremsscheiben**
Anti-losening safety for wheel disc brake
Sécurité anti-perte pour frein à disque sur roue

(30) Priorität: 18.03.2003 DE 10311897
(43) Veröffentlichungstag der Anmeldung: 22.09.2004
(73) Patentinhaber: KNORR-BREMSE Systeme für Schienenfahrzeuge GmbH, 80809 München (DE)
(72) Erfinder: Wirth, Xaver, Dr., 85737 Ismaning (DE)

(56) Entgegenhaltungen:
- EP-A- 0 266 464
- GB-A- 887 786
- GB-A- 1 585 789
- PATENT ABSTRACTS OF JAPAN Bd. 2003, Nr. 09, 3. September 2003 (2003-09-03) & JP 2003 148440 A (EAST JAPAN RAILWAY CO; YASUDA SEISAKUSHO CO LTD; NIPPON KASEN KOGYO KK), 21. Mai 2003 (2003-05-21)

## Beschreibung

Die vorliegende Erfindung betrifft eine Vorrichtung zur Verliersicherung von Radbremsscheiben gemäß dem Oberbegriff des Anspruchs 1.

Bei den bekannten Schienenrädern sind die beidseitig an dem Radkörper angeschlossenen Radbremsscheiben durch eine Vielzahl von über den Umfang verteilten Durchgangsschrauben befestigt, wobei sie den Radkörper durchtreten und mit ihrem jeweiligen Kopf in einer Senkung der einen Radbremsscheibe und mit einer aufgeschraubten Mutter in einer Senkung der anderen Radbremsscheibe einliegt.

Um auszuschließen, daß Schrauben, die nicht ordnungsgemäß angezogen waren, durch selbsttätiges Losdrehen der Mutter während des Fahrbetriebs unter Umständen verlorengehen, was naturgemäß zu einer erheblichen Gefährdung des Fahrbetriebs führt, gehen Forderungen dahin, die Schraubverbindungen zu sichern.

Aus der DE 100 52 566 A1 ist eine Verliersicherung bekannt, bei der ein Federelement zwischen den durch den Schraubenkopf und die zugeordneten Senkung sowie zwischen den durch die Mutter und die zugeordnete Senkung gebildeten Ringspalten angeordnet ist.

Durch die seitlich am Schraubenkopf bzw. der Mutter plazierte Verliersicherung müssen die Senkungen in ihrem Durchmesser entsprechend dimensioniert sein. Dies ist jedoch insoweit nachteilig, als die Befestigungsbohrungen und damit auch die Senkungen einen möglichst kleinen Durchmesser aufweisen sollen, um den Reibvorgang beim Bremsen nicht zu beeinträchtigen.

In der EP 0 266 464 A1 ist eine Sicherungsvorrichtung geoffenbart, mit einem Bolzen, an dessen einem Ende ein mit Fingern versehenes Federelement angeordnet ist, wobei die Finger eine Schulter des Bolzens hintergreifen. Dabei ist das Federelement zwischen zwei Kappen gehalten, von denen eine Kappe die andere Kappe mit einem Kragen überdeckt.

Der vorliegenden Erfindung liegt die Aufgabe zugrunde, eine Vorrichtung zur Verliersicherung der gattungsgemäßen Art zu entwickeln, daß die Betriebssicherheit eines Schienenrades insgesamt verbessert wird.

Diese Aufgabe wird durch eine Verliersicherung gelöst, die die Merkmale des Anspruchs 1 aufweist.

Durch diese konstruktive Ausbildung werden eine ganze Reihe bemerkenswerter Vorteile erreicht.

So ist zunächst einmal zu nennen, daß die axial fixiert an der Durchgangsschraube gehaltene Sicherungsscheibe nur dann ihre Sicherungsposition, in der sie an der Mutter angreift, einnehmen kann, wenn die Mutter eine vorbestimmte Endlage einnimmt, d. h., wenn diese festgezogen ist.

Ein versehentliches lockeres Aufschrauben der Mutter auf die Durchgangsschraube ist dadurch insoweit ausgeschlossen.

Des weiteren können die Senkungen sowohl für den Schraubenkopf wie auch für die Mutter in ihrem Durchmesser sehr klein gehalten sein, da beide Schraubenteile zum einen eine innere Werkzeugaufnahme aufweisen, beispielsweise einen Innensechskant, und zum anderen die Verliersicherung, sprich die Sicherungsscheibe ausschließlich im Inneren der Mutter zum Eingriff kommt, so daß, im Gegensatz zum Stand der Technik, außenseitig kein Platz benötigt wird.

Letztendlich bedeutet dies eine Verbesserung des Reibverhaltens der Radbremsscheiben, da die jeweilige Reibfläche in ihrer Dimensionierung optimiert ist.

Dies trägt ebenso zur Erhöhung der Betriebssicherheit bei wie der genannte Anzugzwang der Mutter, wenn die Sicherungsscheibe zum Einsatz kommt, so daß die Durchgangsschraube fest verspannt ist.

Darüber hinaus sorgt diese Verliersicherung dafür, daß auch im rauhen Fahrbetrieb und den dabei auftretenden Erschütterungen ein Lösen der Mutter ausgeschlossen ist, so daß durch die Erfindung der Betrieb des Schienenrades insgesamt sicherer wird.

Nach einer vorteilhaften Weiterbildung der Erfindung ist vorgesehen, als Sicherungsscheibe eine an sich bekannte Klemmscheibe einzusetzen, die tellerfederartig ausgebildet ist und radiale, von der Innenbohrung ausgehende Schlitze aufweist, so daß sich Zungen bilden, die in entsprechende Vertiefungen in dem an der Durchgangsschraube abgeformten Zapfen eingreifen.

Dabei können diese Vertiefungen aus einer umlaufenden Rille, mehreren, parallel zueinander umlaufenden Feinrillen oder als Feingewinde ausgebildet sein.

Denkbar ist aber auch, den Zapfen glatt auszubilden, wobei dann aufgrund der Koniszität, die sich zum freien Ende des Zapfens hin erstreckt, der den Zungen der Sicherungsscheibe innewohnenden Federkräfte eine Selbsthemmung auftritt, durch die die Sicherungsscheibe bzw. die Zungen reibschlüssig am Zapfen anliegen.

Weiter besteht die Möglichkeit, zwei Sicherungsscheiben vorzusehen, durch die eine Erhöhung der Sicherheit gegen Dauerbruch erreicht wird.

Da, wie erwähnt, zunächst die Mutter angezogen wird, üblicherweise mit einem Spezialschlüssel, der auch eine Aufnahmebohrung für den Zapfen aufweist, und danach die Sicherungsscheibe auf den Zapfen aufgeschoben wird, entsteht keine Beeinträchtigung beim Festziehen der Mutter, was sich hinsichtlich der Aufbringung des Anziehdrehmomentes vorteilhaft darstellt.

Neben einer kostengünstigen Herstellung der Verliersicherung ist ein weiterer Vorteil darin zu sehen, daß das Vorhandensein bzw. der Sitz der Sicherungsscheibe von außen her ohne weiteres erkennbar ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt eines Schienenrades mit einer erfindungsgemäßen Verliersicherung in einer geschnittenen Seitenansicht,
- Figur 2: eine vergrößerte Darstellung eines Teilausschnittes der Figur 1,
- Figur 3: eine Sicherungsscheibe in einer Draufsicht.

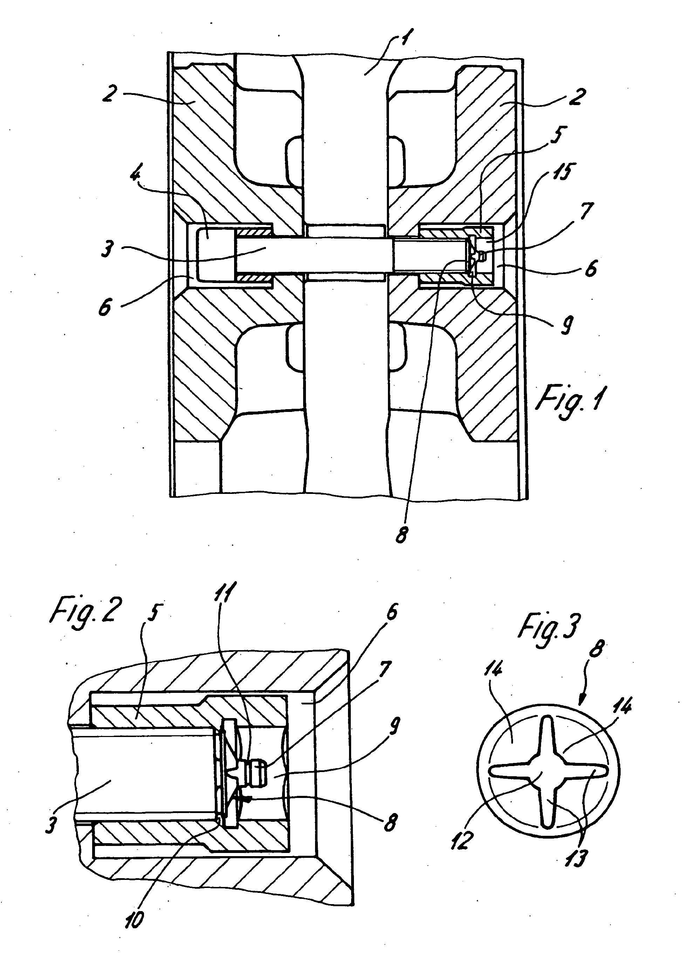

In der Figur 1 ist ein Teil eines Schienenrades dargestellt, das einen Radkörper 1 aufweist sowie beidseitig daran befestigte Radbremsscheiben 2.

Diese sind durch über den Umfang verteilte Durchgangsschrauben 3 am Radkörper 1 festgelegt, wobei jeweils ein Kopf 4 der Durchgangsschraube 3 in einer Senkung 6 der einen Radbremsscheine 2 und eine auf die Durchgangsschraube 3 aufgedrehte Mutter 5 in einer Senkung 6 der anderen Radbremsscheibe 2 einliegt. Dabei weist die Mutter 5 eine Werkzeugaufnahme 15, beispielsweise in Form eines Innensechskants, auf.

Nach einem Festziehen der Mutter 5 wird zur Verliersicherung eine Sicherungsscheibe 8 auf einen zentrisch am zugeordneten Ende der Durchgangsschraube 3 bzw. an deren Schaft angeformten Zapfen 7 aufgeschoben.

Wie insbesondere die Figur 3 sehr deutlich zeigt, ist die Sicherungsscheibe 8 als an sich bekannte Klemmscheibe ausgebildet, die nach Art einer Tellerfeder konisch ausgebildet ist, jedoch radial sich von einer Mittenöffnung 12 her nach außen erstreckende Schlitze 13 aufweist, durch die federnde Zungen 14 gebildet sind, die reib- und/oder formschlüssig an den Zapfen 7 angreifen. Dabei verjüngt sich die Sicherungsscheibe 8 zum freien Ende des Zapfens 7 hin.

Zum formschlüssigen Eingriff der Sicherungsscheibe 8 ist in dem Zapfen 4 eine umlaufende Rille 11 vorgesehen, in die die Zungen 14 eingreifen, so daß hierdurch eine axiale Sicherung gewährleistet ist.

Zur axialen Fixierung der Mutter 5 weist diese einen umlaufenden Kragen 10 auf, an dem die Sicherungsscheibe 8 anliegt.

Das lichte Querschnittsabmaß der Werkzeugaufnahme 9 ist etwas größer als der Außendurchmesser der Sicherungsscheibe 8, so daß ein problemloses Durch- und Aufschieben auf den Zapfen 7 möglich ist.

Während die Sicherungsscheibe 8 in Anfangsstellung reibschlüssig am Zapfen 7 anliegt, wird der Formschluß durch Eingriff der federnden Zungen 14 in die Rille 11 dann erreicht, wenn sich die Sicherungsscheibe 8 beispielsweise durch auftretende Stoßkräfte geringfügig axial verschiebt.

Anstelle einer Rille 11 können mehrere, parallel zueinander angeordnete, umlaufende Feinrillen vorgesehen sein oder ein Feingewinde, in das die Zungen 14 einrasten.

Da die Sicherungsscheibe durch die Werkzeugaufnahme 9 frei einsehbar ist, ist eine optische Kontrolle dahingehend möglich, ob überhaupt eine Sicherungsscheibe montiert ist. Insofern bietet die Erfindung gegenüber dem Stand der Technik, bei dem eine optische Kontrolle nicht so ohne weiteres möglich ist, eine Verbesserung.

### Bezugszeichenliste

- 1: Radkörper
- 2: Radbremsscheibe
- 3: Durchgangsschraube
- 4: Schraubenkopf
- 5: Mutter
- 6: Senkung
- 7: Zapfen
- 8: Sicherungsscheibe
- 9: Werkzeugaufnahme
- 10: Kragen
- 11: Rille
- 12: Mittenöffnung
- 13: Schlitz
- 14: Zunge

## Patentansprüche

1. Vorrichtung zur Verliersicherung von Radbremsscheiben, die an einem Radkörper (1) eines Schienenrades beiderseits angeordnet und mittels Durchgangsschrauben (3) befestigt sind, wobei der Schraubenkopf (4) jeder Durchgangsschraube (3) in einer Senkung (6) der einen Radbremsscheibe (2) und eine auf die Durchgangsschraube (3) aufgeschraubte, innen betätigbare Mutter (5) in einer Senkung (6) der anderen Radbremsscheibe mit einer Verliersicherung einliegt, **dadurch gekennzeichnet, dass** an dem dem Schraubenkopf (4) abgewandten Ende der Durchgangsschraube (3) ein Zapfen (7) angeformt ist, auf dem eine an die Mutter (5) angreifende Sicherungsscheibe (8) axial gesichert gehalten ist, und dass das lichte Abmaß einer Werkzeugaufnahme (9) der Mutter (5) größer ist als der Außendurchmesser der Sicherungsscheibe (8).

2. Vorrichtung nach Anspruch 1, **dadurch gekennzeichnet, daß** die Sicherungsscheibe (8) reib- und/oder formschlüssig auf dem Zapfen (7) gehalten ist.

3. Vorrichtung nach Anspruch 1 oder 2, **dadurch gekennzeichnet, daß** die Sicherungsscheibe (8) aus einer an sich bekannten Klemmscheibe gebildet ist, die tellerfederförmig ausgebildet ist und ausgehend von einer Mittelöffnung (12) radial sich erstreckende Schlitze (13) aufweist, die jeweils eine Zunge (14) seitlich begrenzen.

4. Vorrichtung nach Anspruch 3, **dadurch gekennzeichnet, daß** die Sicherungsscheibe (8) in Richtung des freien Endes des Zapfens (7) Kegelstumpfförmig ausgebildet ist.

5. Vorrichtung nach Anspruch 1, **dadurch gekennzeichnet, daß** die Sicherungsscheibe (8) auf ihrer dem freien Ende des Zapfens (7) abgewandten Seite an einem Kragen (10) der Mutter (5) anliegt.

6. Vorrichtung nach einem der Ansprüche 1 bis 5, **dadurch gekennzeichnet, daß** der Zapfen (7) glattschaftig ausgebildet ist.

7. Vorrichtung nach einem der Ansprüche 1 bis 5, **dadurch gekennzeichnet, daß** der Zapfen (7) mindestens eine umlaufende Rille (11) aufweist.

8. Vorrichtung nach Anspruch 7, **dadurch gekennzeichnet, daß** mehrere, parallel zueinander verlaufende, umlaufende Feinrillen vorgesehen sind.

9. Vorrichtung nach einem der Ansprüche 1 bis 5, **dadurch gekennzeichnet, daß** der Zapfen (7) ein Feingewinde aufweist.

10. Vorrichtung nach Anspruch 1, **dadurch gekennzeichnet, daß** zwei Sicherungsscheiben (8) auf dem Zapfen (7) angeordnet sind.

## Claims

1. Safeguard device to prevent loss of wheel brake discs disposed on a wheel body (1) of a rail wheel on both sides and fastened by means of through-screws (3), wherein the screw head (4) of each through-screw (3) is placed into a recess (6) of the first wheel brake disc (2) and a nut (5) operable inside and screwed onto said through-screw (3) is placed in a recess (6) on the other wheel brake disc with a loss-preventing safeguard device, **characterised in that** a pin (7) is moulded on that end of said through-screw (3) which is opposite to said screw head (4), on which pin a lock washer (8) is retained with axial locking effect, which washer acts at said nut (5), and that the rough dimension of a tool holder (9) of said nut (5) is greater than the outside diameter of said lock washer (8).

2. Safeguard device according to Claim 1, **characterised in that** said lock washer (8) is retained by friction and/or positive connection on said pin (7).

3. Safeguard device according to Claim 1 or 2, **characterised in that** said lock washer (8) consists of a clamping disc known per se and having a configuration in the form of a disc spring and presents radially extending slots (13), starting out from a central opening (12), which constitute a respective lateral delimitation of a tongue (14).

4. Safeguard device according to Claim 3, **characterised in that** said lock washer (8) presents a configuration in the form of a truncated cone extending towards the free end of said pin (7).

5. Safeguard device according to Claim 1, **characterised in that** said lock washer (8) bears against a collar (10) of said nut (5) on its side opposite to the free end of said pin (7).

6. Safeguard device according to any of the Claims 1 to 5, **characterised in that** said pin (7) is configured with a smooth shaft.

7. Safeguard device according to any of the Claims 1 to 5, **characterised in that** said pin (7) is provided with at least one peripheral groove (11).

8. Safeguard device according to Claim 7 **characterised in that** several peripheral fine grooves are provided which extend in parallel to each other.

9. Safeguard device according to any of the Claims 1 to 5, **characterised in that** said pin (7) comprises a fine thread.

10. Safeguard device according to Claim 1, **characterised in that** two lock washers (8) are disposed on said pin (7).

## Revendications

1. Dispositif anti-perte à empêcher la perte des disques de frein montés sur la roue, disposés à un corps de roue (1) d'une roue sur rail des deux côtés et fixés moyennant des vis traversantes (3), dans lequel la tête de vis (4) de chaque vis traversante (3) est placée dans un évidement (6) du premier disque de frein monté sur la roue (2) et un écrou (5) opérable à l'intérieur et vissé sur ladite vis traversante (3) est placé dans un évidement (6) à l'autre disque de frein monté sur la roue à un dispositif anti-perte, **caractérisé en ce qu'**un tourillon (7) est moulé sur cette extrémité de ladite vis traversante (3) qui est opposée à ladite tête de vis (4), sur lequel tourillon est tenue une rondelle d'arrêt (8) à effet de serrage axial, à cette rondelle agissant audit écrou (5), et **en ce que** la dimension intérieure d'un porte-outil (9) dudit écrou (5) est plus grande que le diamètre extérieur de ladite rondelle d'arrêt (8).

2. Dispositif anti-perte selon la revendication 1, **caractérisé en ce que** ladite rondelle d'arrêt (8) est tenue par frottement et/ou de manière positive sur ledit tourillon (7).

3. Dispositif anti-perte selon la revendication 1 ou 2, **caractérisé en ce que** ladite rondelle d'arrêt (8) consiste d'un disque de serrage connu en soi et ayant une configuration sous forme d'une rondelle Belleville, qui est munie des fentes s'étendant en sens radial en délimitant latéralement une lame (14) respective, en départ d'une ouverture centrale (12).

4. Dispositif anti-perte selon la revendication 3, **caractérisé en ce que** ladite rondelle d'arrêt (8) présente une configuration sous forme d'un tronc de cône s'étendant vers l'extrémité libre dudit tourillon (7).

5. Dispositif anti-perte selon la revendication 1, **caractérisé en ce que** ladite rondelle d'arrêt (8) porte contre collet (10) dudit écrou (5) de son côté opposé à l'extrémité libre dudit tourillon (7).

6. Dispositif anti-perte selon une quelconque des revendications 1 à 5, **caractérisé en ce que** ledit tourillon (7) est configuré à une tige lisse.

7. Dispositif anti-perte selon une quelconque des revendications 1 à 5, **caractérisé en ce que** ledit tourillon (7) est muni d'au moins une rainure périphérique (11).

8. Dispositif anti-perte selon la revendication 7 **caractérisé en ce que** plusieurs rainures fines périphériques sont formées, qui s'étendent l'une en parallèle à l'autre.

9. Dispositif anti-perte selon une quelconque des revendications 1 à 5, **caractérisé en ce que** ledit tourillon (7) comprend un filetage à pas fin.

10. Dispositif anti-perte selon la revendication 1, **caractérisé en ce que** deux rondelles d'arrêt (8) sont disposées sur ledit tourillon (7).
